# FASCICULE DE BREVET EUROPEEN

(11) **EP 2 940 670 B1**
(45) Date de publication et mention de la délivrance du brevet: **03.06.2020**
(21) Numéro de dépôt: 15164952.2
(22) Date de dépôt: 24.04.2015
(51) Int. Cl.: G08G 1/042, G01S 7/02

(54) **DISPOSITIF DE GESTION DE STATIONNEMENT DE VÉHICULES ET PROCÉDÉ DE GESTION METTANT EN OEUVRE CE DISPOSITIF**
VORRICHTUNG ZUR PARKSTEUERUNG VON FAHRZEUGEN, UND STEUERVERFAHREN, BEI DEM DIESE VORRICHTUNG EINGESETZT WIRD
DEVICE FOR MANAGING THE PARKING OF VEHICLES AND MANAGEMENT METHOD USING SAID DEVICE

(30) Priorité: 24.04.2014 FR 1453668
(43) Date de publication de la demande: 04.11.2015
(73) Titulaire: Body, Hugues, 63000 Clermont Ferrand (FR)
(72) Inventeur: Body, Hugues, 63000 Clermont Ferrand (FR)
(74) Mandataire: Lavoix

(56) Documents cités:
- EP-A1- 2 905 764
- WO-A1-00/46068
- CH-A1- 703 408
- JP-A- 2011 227 055
- US-A- 6 043 770
- US-A1- 2004 066 323
- US-B2- 7 990 313

## Description

La présente invention a pour objet un dispositif de gestion de stationnement de véhicules automobiles, voitures, motocyclettes ou camions, notamment en voirie, ou encore sur des aires ou parcs, du type comprenant des moyens de détection de présence de véhicules automobiles sur les emplacements individuels, ainsi qu'à un procédé de gestion mettant en œuvre ce dispositif.

Par gestion au sens de la présente invention, on entend la détection de la présence ou de l'absence d'un véhicule sur l'emplacement individuel, et la transmission de cette information à des moyens de traitement, de préférence, informatisés, et éventuellement le traitement des informations recueillies et leur utilisation.

Des exemples de moyens de détection connus sont décrits dans EP 2 905 764 A1 et US 7 990 313 B2.

EP 2 905 764 A1 décrit un système de détection magnétique pour détecter la présence d'un véhicule routier. Ce système comporte, en complément, un radar (radar occupancy status - ROS) qui permet de confirmer (ou d'infirmer) la présence d'un véhicule lorsque le système de détection magnétique (magnetic occupancy status -MOS) renvoie un résultat positif.

US 7 990 313 B2 décrit un télémètre à radar pour détecter la présence d'un véhicule automobile sur une portion de route, par exemple à l'arrêt devant un feu tricolore. Un circuit de traitement comporte une boucle de verrouillage de phase permettant de réguler la fréquence d'émission du radar.

On a déjà prévu de disposer des capteurs sensibles à la présence et à l'absence de voitures sur des emplacements, par exemple, de parcs de stationnement et d'utiliser les informations y relatives pour gérer, par exemple, l'accès à ces parcs sous des formes diverses.

Ainsi on a déjà équipé des parcs souterrains ou couverts de capteurs individuels de type à ultra-son disposés au-dessus de chaque emplacement individuel, pour détecter l'arrivée ou le départ des véhicules sur ces emplacements, et transmettre les informations correspondantes à une unité de gestion.

Ces dispositifs à capteurs ultra-son ne s'avèrent pas réellement utilisables pour les places ou parcs de stationnement en plein air.

On a aussi déjà prévu de détecter la présence ou l'absence de véhicules sur des emplacements individuels à l'aide de capteurs magnétiques. La détection par champs magnétique est basée sur la mesure du champ magnétique terrestre (dont la valeur et l'orientation sont constantes localement). Une masse métallique perturbe fortement cette valeur et cette orientation. Ces changements permettent de déduire la présence ou l'absence d'un véhicule.

On a cependant constaté que le degré de fiabilité des systèmes ainsi équipés ne permet pas une gestion précise de chaque emplacement individuel mais une simple gestion statistique. Cette détection par technologie magnétique est extrêmement sensible à l'environnement électromagnétique où se situe le capteur. Le fonctionnement d'un tel capteur en voirie se trouve donc très perturbé, notamment par les champs magnétiques induits par les câbles électriques souterrains, induits par les antennes GSM, WIFI... Même dans le cas où ces capteurs sont positionnés au sol, pour se trouver juste sous le véhicule arrêté, la fiabilité reste insuffisante et la mise en œuvre de sanctions, par exemple, pour stationnement interdit, ou dépassement de durée autorisée, peut être contestée avec succès devant les instances juridiques, qui exigent un niveau de preuve extrêmement élevé.

La présente invention se propose de remédier à ces inconvénients et de fournir un dispositif de gestion d'aires ou parcs de stationnement d'automobile, permettant une gestion précise et fiable de chaque emplacement individuel de stationnement.

Un autre objectif de l'invention est de permettre, grâce à ce dispositif, une gestion complètement fiable des emplacements, y compris en extérieur, et même en voirie, y compris dans des environnements électromagnétiques difficiles

Un autre objectif de l'invention est de fournit un tel dispositif avec des moyens de détection faciles à installer et à entretenir, et qui, notamment, soient parfaitement fiables sans devoir être installés à l'aplomb sous ou sur le véhicule.

Un autre objectif de l'invention est de fournir un dispositif dont les moyens de détection peuvent prendre en charge plusieurs emplacements adjacents, sans risque d'interférence.

Un autre objectif est de fournir un tel dispositif, dont les moyens de détection puissent être disposés de façon non visible et à l'abri de risques de détérioration.

Un autre objectif, encore, est de fournir un dispositif facilement utilisable pour la gestion d'emplacements, aires ou zones de réglementation ou d'interdiction de stationnement.

L'invention a pour objet un dispositif de gestion de stationnement de véhicules automobiles sur voirie tel que défini par la revendication 1.

De préférence le dispositif comporte un moyen d'identification propre de l'emplacement ou de chacun des emplacements, associé au moyen de détection, de façon à associer à l'information de présence ou d'absence sur un emplacement, une information d'identification de cet emplacement.

L'unité, recevant les informations de présence et d'absence de véhicule, résultant de la détection, peut être propre à chaque emplacement individuel, ou regrouper un certain nombre d'emplacements, ou la totalité des emplacements, notamment en voirie, ou encore sur des aires ou parcs de stationnement. Elle peut, selon le cas, être disposée au niveau de son emplacement, ou bien à distance. La liaison de communication entre le moyen de détection et l'unité peut être filaire ou autre, de préférence par radio, par exemple de type ISM.

De préférence, chaque moyen de détection comprend une alimentation qui lui est propre, par exemple par pile ou accumulateur.

Les hyperfréquences mises en œuvre dans la présente invention, sont comprises entre 1 et 1000 GHz, et appartiennent de préférence, aux bandes règlementées dites ISM (Industrial, Scientific and Medical). Plus généralement les fréquences préférées vont de 10 jusqu'à 30 GHz, voire beaucoup plus, en fonction des progrès technologiques dans ces domaines.

L'hyperfréquence du moyen de détection est, dans une forme de réalisation préférée, comprise entre 24 et 24,25GHz (en accord avec la réglementation de cette bande ISM).

Les fréquences permettent d'émettre dans un diagramme de rayonnement actif, généralement en forme de lobe ovale ou ellipsoïdal d'une longueur, de préférence, comprise entre 0 et 12 m, plus préférentiellement entre 1 et 8 m, et notamment entre 1 et 5 m, selon la puissance d'émission et la sensibilité du système.

La fréquence utilisée pour la communication hertzienne entre le moyen de détection et l'unité à distance, est, de préférence, dans la bande de 868 à 870 MHz, en Europe.

Dans un premier mode de mise en œuvre, l'émetteur est associé, dans un capteur, avec le récepteur pour former un radar.

Dans un exemple, le dispositif comporte : au moins un capteur hyper fréquence disposé au niveau d'au moins un emplacement susceptible de recevoir un véhicule, ledit capteur comprenant, de préférence dans un boîtier qui lui est propre :
un, deux, trois ou quatre radars hyperfréquence, chacun orienté spécifiquement vers un emplacement qui lui est attribué, et sensible à la présence et à l'absence d'un véhicule sur son emplacement spécifique,
un moyen de transmission, de préférence sans fil, susceptible de communiquer à ladite unité, l'information relative à la présence ou à l'absence d'un véhicule sur l'emplacement, ledit moyen de transmission étant, de préférence, bidirectionnel pour transmettre également des informations au capteur,
de préférence, un moyen d'identification attribué à chaque radar hyperfréquence, pour identifier l'emplacement de stationnement qui lui est spécifique, et associer cette identification à chaque transmission d'information vers l'unité à distance,
de préférence, une alimentation électrique locale propre à chaque capteur,
et ladite unité, de préférence à distance, recevant les informations d'un ou d'un groupe de capteurs, éventuellement avec les informations d'identification, pour gérer lesdites informations et/ou les transmettre à une unité de gestion.

Le capteur peut être disposé au sol ou dans le sol, auquel cas il peut éventuellement être situé à l'intérieur de l'emplacement qu'il surveille, ou à faible hauteur au-dessus du sol, ou encore à une hauteur, de préférence, n'excédant pas 1,50 m, et plus préférentiellement 1 m, ou moins, par exemple entre 40 et 70 cm, notamment pour un capteur situé à une distance d'au plus 200 cm d'un bord de l'emplacement. Il peut cependant aussi être situé au-dessus du ou des emplacements qui lui sont associés, par exemple sous un plafond. Par intérieur de l'emplacement on entend, dans les présentes, une position dont la projection verticale est située dans l'emplacement, quel que soit la position verticale dans ou sur le sol, ou au-dessus du sol.

On peut, cependant aussi placer le capteur à une distance plus importante de l'emplacement qu'il dessert, pouvant dépasser 8 ou 10 m, notamment s'il n'existe pas de risque de voir des obstacles intempestifs, par exemple un véhicule, venir se positionner entre le capteur et l'emplacement desservi.

Dans un exemple, le ou les radars hyperfréquence du capteur sont du type sensible à la simple réflexion par l'obstacle constitué par la présence du véhicule sur son emplacement, le capteur étant alors, de préférence, situé au niveau du sol, ou sous le sol, ou à faible distance au-dessus du sol, et à l'intérieur de l'emplacement, ou sur un de ses côtés ou sommets, ou à l'extérieur mais à faible distance d'un côté ou sommet, un tel capteur n'entrainant qu'une très faible consommation électrique, pouvant être assurée, par exemple, par une simple pile, pendant de nombreuses années.

Selon l'invention, le ou chacun des radars portés par le capteur, comporte alors :
un oscillateur générant une onde d'une hyperfréquence f1, amplifiée puis transmise par une antenne orientée vers l'emplacement spécifique, en direction de la position d'un véhicule sur cet emplacement,
un autre oscillateur générant une onde de fréquence centrée sur une hyperfréquence f2 légèrement différente de f1,
un mélangeur, dont l'une des entrées est alimentée par une antenne réceptrice orientée vers l'emplacement, et l'autre par ledit autre oscillateur à fréquence f2, la sortie du mélangeur étant connectée à un amplificateur logarithmique.

La présence du véhicule est alors déterminée par le signal de sortie du mélangeur. Si un véhicule est présent, la sortie du mélangeur présente un signal de fréquence f1 - f2, et la sortie de l'amplificateur présente alors une tension significative.

Dans une autre forme de réalisation particulière incluant un capteur, qui est préférée si l'on dispose le capteur nettement à distance de l'emplacement y relatif, par exemple dans une borne, meuble urbain ou paroi, situé suffisamment à l'extérieur de l'emplacement pour éviter un risque de percussion par le véhicule, le radar hyperfréquence peut être du type à mesure de distance de l'obstacle réfléchissant. L'architecture de ce radar peut être de type "FMCW" (Frequency-Modulated Continuous-Wave).

Dans un second mode de mise en œuvre, le moyen de détection hyperfréquence comporte
un émetteur hyperfréquence disposé en un emplacement, et aligné avec un récepteur hyperfréquence et la position du véhicule sur l'emplacement, entre l'émetteur et le récepteur, de sorte que le véhicule arrivant sur l'emplacement intercepte le faisceau hyperfréquence et provoque une diminution de la puissance du faisceau détecté par le détecteur,
de préférence, un moyen de transmission susceptible de communiquer à ladite unité, l'information relative à la présence ou à l'absence d'un véhicule sur l'emplacement, ledit moyen de transmission étant, de préférence, bidirectionnel pour transmettre également des informations au capteur,
de préférence, un moyen d'identification attribué à chaque émetteur ou récepteur hyperfréquence, pour identifier l'emplacement de stationnement qui lui est spécifique, et associer cette identification à chaque transmission d'information vers l'unité à distance, de préférence, une alimentation électrique locale propre à chaque émetteur,
et ladite unité, de préférence à distance, recevant les informations d'un ou d'un groupe de récepteurs, éventuellement avec les informations d'identification, pour gérer lesdites informations et/ou les transmettre à une unité de gestion.

L'émetteur hyperfréquence peut être disposé au sol ou dans le sol, à l'intérieur de l'emplacement qu'il surveille, ou au niveau d'un bord ou d'un coin de cet emplacement, ou à faible hauteur au-dessus du sol, ou encore à une hauteur, de préférence, n'excédant pas 1,50 m, et plus préférentiellement 1 m, ou moins, par exemple entre 40 et 70 cm, le faisceau émis étant orienté pour rencontrer le véhicule situé sur l'emplacement. Le détecteur est disposé en alignement. On peut aussi placer l'émetteur en hauteur, à coté ou au-dessus de l'emplacement, mais dans ce cas le détecteur devra être situé dans ou sur le sol, ou à faible hauteur, ce qui n'est pas préféré.

On peut, cependant aussi placer l'émetteur, voire le récepteur, à une distance plus importante de l'emplacement qu'il dessert, pouvant dépasser 8 ou 10 m, notamment s'il n'existe pas de risque de voir des obstacles intempestifs, par exemple un véhicule, venir se positionner entre le capteur et l'emplacement desservi. Ainsi, par exemple, un émetteur placé au sol de l'emplacement peut adresser son faisceau ou lobe vers un récepteur situé, en direction verticale ou oblique à une telle grande hauteur.

De préférence l'émetteur est placé au sol ou dans le sol, à l'intérieur de l'emplacement qu'il dessert ou sur un coté de l'emplacement, ou un coin, ou à l'extérieur mais à faible distance de l'emplacement, par exemple inférieure à 100 cm. et le récepteur est situé dans une borne, à une hauteur de préférence au moins égale à 50 cm, ou au plafond, le véhicule se trouvant dans la trajectoire entre l'émetteur et le récepteur.

Ce mode de mise en œuvre permet d'utiliser un émetteur très simple, par exemple dans un boîtier étanche de petite taille, facile à emboîter, fixer sur ou enterrer dans le sol.

Par exemple, l'émetteur peut être disposé dans un contenant tel qu'un boîtier ou un plot aplati, de très faible hauteur, fixé sur le sol, et sur lequel des roues de véhicule peuvent passer sans problème. De préférence, l'antenne de l'émetteur est inclinée à l'avance dans ce contenant, d'un angle déterminé dans le plan vertical, permettant l'alignement avec le récepteur, fixé dans sa position déterminée à l'avance, dès lors que le contenant est tourné en bonne position dans le plan horizontal vers le récepteur.

On peut prévoir que l'émetteur n'envoie périodiquement que des impulsions hyperfréquences très brèves, par exemple d'une durée de 1 à 1000 microsecondes , à un intervalle élevé, par exemple toutes les 0,1 à 5 s. Il en résulte une consommation électrique extrêmement réduite, fournie, par exemple par une simple pile avec une autonomie pouvant durer de 10 à 15 ans. La mise en place, et le remplacement sont très simples et ne nécessitent aucun paramétrage particulier, en dehors de l'orientation correcte de l'antenne de l'émetteur.

Le récepteur peut être associé à ou incorporé dans une unité sensible au récepteur pour gérer l'information de présence ou d'absence de véhicule sur l'emplacement auquel l'émetteur et le récepteur sont dédiés. Cette unité peut être un simple indicateur visuel ou lumineux, par exemple à lumières rouge et verte, disposé sur ou à côté de l'emplacement, par exemple sur un luminaire d'éclairage ou sur une borne. On peut, de plus, y prévoir un émetteur radio ou autre moyen de communication, pour communiquer l'information, de préférence associée à une identification de l'emplacement, à un concentrateur ou des moyens de gestion informatique.

Le dispositif peut comporter un ensemble d'émetteurs commun regroupés pour plusieurs emplacements voisins ou adjacents, par exemple 2 à 4 emplacements, comprenant une pluralité d'émetteurs spécifiquement orientés vers chacun des emplacements, chaque récepteur étant disposé respectivement en alignement avec son émetteur.

En variante, on peut prévoir un seul récepteur à large lobe, détectant les impulsions de plusieurs détecteurs d'emplacements voisins ou adjacents, tous orientés vers lui.

Dans le mode de mise en œuvre le plus simple, l'unité de gestion peut consister en un simple indicateur lumineux d'occupation de l'emplacement directement et univoquement actionné par le récepteur, situé, au niveau de l'emplacement, par exemple sur une borne ou au plafond, sans aucune identification de l'emplacement.

D'une façon générale, dans toutes les formes de réalisation, on préfère que l'émission et la réception hyperfréquences soient effectuées par impulsions périodiques très brèves (inférieures à quelques millisecondes). L'intervalle entre ces impulsions peut être paramétrée à distance. Cet intervalle peut être choisi pour limiter la consommation électrique du capteur, par exemple de l'ordre de quelques millièmes de secondes à quelques secondes. L'intervalle est suffisamment court pour ne pas être pris en défaut par le remplacement d'un véhicule par un autre sur l'emplacement.

Le moyen d'identification peut être un numéro de série unique affecté, lors de la fabrication, à chaque émetteur, ou bien à chaque radar hyperfréquence, permettant à un logiciel de gestion de faire correspondre ce numéro aux coordonnées, de préférence les coordonnées GPS, de l'emplacement. De préférence, un tag RFID passif (étiquette à lecture sans contact à quelques centimètres) peut être inséré dans le boitier, permettant ainsi d'obtenir le numéro de série avec un lecteur sans contact; ceci permet, notamment, de lire ce numéro de série même si le capteur est enterré.

Dans une autre forme de réalisation, le moyen d'identification est agencé pour recevoir un identifiant, une fois l'émetteur ou le capteur mis en place. Par exemple, une fois l'émetteur ou le capteur installé sur le terrain, on lui transmet, à l'aide un d'un dispositif spécifique (console, téléphone portable, tablette, muni d'un GPS...), et en approchant un aimant près de l'émetteur ou du capteur (à quelques centimètres), la position GPS du capteur et/ou un identifiant et/ou le numéro de l'unité à distance, par exemple un concentrateur auquel le capteur doit se rattacher. Ainsi, le capteur, connaissant sa position GPS (unique), peut utiliser ses coordonnées comme identifiant unique. On peut ainsi s'affranchir du numéro de série unique programmé en usine, et une simplifier le paramétrage du capteur lors de l'installation ou du remplacement du capteur. Dans la forme de réalisation, qui utilise un récepteur à distance de l'émetteur, les moyens d'identification précités, si on en prévoit, peuvent avantageusement être associés au récepteur, par exemple dans un boîtier qui le contient.

On préfère qu'un identifiant soit ainsi directement associé à chaque radar hyperfréquence, mais on peut, en variante, prévoir d'associer un identifiant au capteur lui-même, celui-ci étant alors agencé pour distinguer ses différents radars, s'il en comporte plusieurs, et associer cette identification à celle qui lui est propre, lors de l'envoi d'informations à l'unité éloignée.

Dans une forme de réalisation simple et avantageuse, l'émetteur peut, par exemple, porter un numéro de série, provenant de fabrication, et émis par un train d'impulsions hyperfréquence associé à l'impulsion de détection de présence ou d'absence de véhicule, ce qui nécessitera cependant de programmer le récepteur en fonction de ce numéro. Dans une variante préférée, l'émetteur peut porter un numéro simple, à savoir un simple chiffre, par exemple de 1 à 10, ou moins, permettant de programmer le récepteur de façon très simple. Dans une telle forme de réalisation on peut aussi avantageusement utiliser un seul récepteur à large lobe, détectant les impulsions de plusieurs détecteurs d'emplacements voisins ou adjacents, marqués respectivement par un chiffre individuel, transmis par l'émetteur, permettant au récepteur de savoir quel ou quels lobes d'émission est ou sont interceptés par un ou des véhicules.

L'alimentation électrique de l'émetteur ou du capteur est, de préférence une alimentation locale, notamment pile, batterie ou cellules photovoltaïques. Une simple alimentation à pile au lithium confère une autonomie de plusieurs années. On peut éventuellement prévoir de remplacer les piles. De préférence le niveau de charge de pile ou batterie peut être transmis à l'unité à distance, par le moyen de transmission du capteur.

De façon avantageuse, le capteur, ou le simple émetteur, peut être contenu dans un boîtier étanche en matière synthétique, ou_même enrobé d'un matériau étanche telle qu'une résine, et peut être enterré dans le sol, ou placé dans une butée de stationnement ou une bordure, par exemple de trottoir, ou une borne, ou emboîté dans un mobilier urbain. Les dimensions typiques d'un tel boîtier peuvent être, par exemple de l'ordre de 100x100x70 mm, ou inférieures. Les antennes d'émission ou de réception peuvent être conformées, d'une façon usuelle pour l'homme de l'art afin de permettre une bonne propagation des ondes hyperfréquence à travers la paroi concernée d'un tel boîtier ou la couche d'enrobage.

Dans une forme de réalisation avantageuse, notamment pour des emplacements en voirie, le dispositif selon l'invention peut comporter une borne située à une certaine distance de son ou ses emplacements, n'excédant pas, de préférence, 200 cm, cette borne portant le capteur ou le récepteur de préférence à une hauteur comprise entre 10 et 100 cm au-dessus du niveau du sol de l'emplacement, par exemple de l'ordre de 50 cm, une alimentation électrique, par exemple une batterie, et, de préférence, des indicateurs lumineux de présence ou d'absence de véhicule et/ou un écran permettant de communiquer des informations au conducteur ou aux agents de la voirie.

Dans le cas, préféré, où une même borne est associée à deux emplacements consécutifs, par exemple le long d'un trottoir, et située au niveau de leur côté commun, on préfère qu'elle présente deux indicateurs lumineux et/ou deux écrans, orientés respectivement vers l'emplacement pertinent.

La borne selon l'invention peut être dédiée à un ou des emplacements destinés à un stationnement non payant, de courte durée, mais on peut également associer le moyen de détection hyperfréquence à une borne de stationnement payant, par exemple autorisant un stationnement non payant de courte durée.

Un capteur peut être associé à un seul emplacement de stationnement, en étant, de préférence, situé à un bord latéral ou une extrémité de l'emplacement.

Cependant, de préférence, on prévoit un capteur pour plusieurs emplacements, situé en une position commune auxdits emplacements, tels que, par exemple :
un bord latéral commun ou une extrémité commune à deux emplacements,
un sommet commun à deux, trois ou quatre emplacements,
ou au voisinage d'une de ces positions,
les antennes des émetteurs-récepteurs spécifiques étant orientés respectivement vers leurs emplacements, de préférence en direction du centre de l'emplacement.

Dans le second mode de mise en œuvre, on peut aussi prévoir de regrouper des émetteurs d'emplacements voisins, en un ensemble, en une position commune auxdits emplacements, tels que, par exemple :
un bord latéral commun ou une extrémité commune à deux emplacements,
un sommet commun à deux, trois ou quatre emplacements,
ou au voisinage d'une de ces positions,
les antennes des émetteurs respectifs étant orientés respectivement vers leurs emplacements, en direction de leurs récepteurs respectifs, de préférence en direction du centre de l'emplacement.

Les émetteurs peuvent être regroupés dans un même boîtier, avec éventuellement une alimentation commune.

L'unité recevant l'information provenant de la détection, de préférence située à distance, peut être un concentrateur communiquant avec une pluralité de capteurs répartis sur une zone déterminée pour une bonne communication sans fil. Ce concentrateur peut être relié par des moyens de transmission classiques, par fil ou sans fil, à des moyens de gestion informatiques, ordinateur ou autres. Pour les aires, ou parcs de grande surface, ou des tronçons de voirie de grande longueur, le dispositif peut comporter une pluralité de concentrateurs répartis dans les différentes zones, et reliés auxdits moyens de gestion informatiques. Cependant, dans le cas où une seule zone est gérée, ladite unité à distance peut être directement un moyen de gestion informatique et/ou piloter divers indicateurs (panneaux à messages variables, voyants lumineux...). Dans le cas le plus simple, chaque emplacement comporte sa propre unité de gestion, qui peut même être réduite à un simple indicateur ou voyant lumineux, situé sur l'emplacement pour indiquer si l'emplacement est libre ou occupé, cet indicateur étant directement piloté pa les moyens de détection de cet emplacement.

La collecte centralisée des informations d'occupation des places de stationnement par le dispositif selon l'invention, permet un traitement informatique qui peut servir dans les utilisations suivantes:
- gestion des zones bleues (zones de stationnement à durée limitée): la durée de stationnement de chaque véhicule étant connue, une alerte (SMS, mail, PMV) peut être générée en cas de dépassement de la durée autorisée.
- gestion des emplacements spécifiques : livraison, stationnement interdit (réservé aux pompiers, police...), places PMR. L'utilisateur (pompier, livreur, police) peut, par l'envoi d'un SMS ou grâce à une application sur téléphone mobile, peut s'identifier sur le serveur afin d'autoriser son stationnement.

- détection de présence de véhicule stationnant sur un passage de sortie d'un garage privé ou emplacement de stationnement privé vers la voie publique, et envoi de l'information à la ou aux personnes autorisées ; on peut prévoir que la personne autorisée ou son véhicule possède une carte ou autre moyen détecté par un capteur usuel relié à l'unité de gestion pour inhiber l'envoi de l'information, si le véhicule détecté est autorisé à utiliser le passage.
- comptage du nombre de places libres ou occupées (en parking ou en voirie): le nombre de places libres peut être affiché sur des PMV distants (connecté au serveur informatique) afin d'indiquer à l'automobiliste si des places sont disponibles ou non.
- guidage des véhicules à la recherche d'une place libre en voirie ou en parking : des PMV indiquent le nombre de places libre dans une allée de parking ou dans une rue.
- étude et statistiques : les informations d'occupation peuvent être stockées. Il est ainsi possible d'établir des statistiques (durée moyenne de stationnement, taux de rotation...) sur une zone donnée permettant de réaliser des études sur le comportement des automobilistes.
- les informations de disponibilité des places libres peuvent être consultées, par les automobilistes, en temps réel, sur Internet, sur smartphone ou tablette.

L'invention a également pour objet un procédé de gestion de stationnement de véhicules automobiles, voitures, motocyclettes ou camions, notamment en voirie, ou encore sur des aires ou parcs de stationnement mettant en œuvre ce dispositif, caractérisé par les étapes suivantes :
surveillance par ladite détection hyperfréquence de chaque emplacement de stationnement, à chaque changement de détection, à savoir arrivée ou départ de véhicule, envoi des informations d'occupation de l'emplacement de stationnement, accompagné de son signal d'identification vers l'unité à distance,
et traitement de cette information selon l'application.

D'autres avantages et caractéristiques de l'invention apparaîtront à la lecture de la description suivante, faite à titre d'exemple non limitatif, et se référant au dessin annexé, dans lequel :
la Figure 1 représente un schéma simplifié d'un radar hyperfréquence d'un capteur selon l'invention,
la Figure 2 représente un schéma simplifié de l'organisation de ce capteur,
les Figures 3 à 5 représentent des vues schématiques en perspective d'exemples de lobes de détection spécifiques d'un emplacement,
les Figures 6 à 9 représentent des vues schématiques de dessus d'exemples de lobes de détection spécifiques d'un capteur associé à deux emplacements adjacents,
la Figure10 représente une vue schématique de dessus des lobes de détection spécifiques d'un capteur associé à quatre emplacements,
la Figure 11 représente une vue schématique en perspective d'un capteur encastré dans une butée de stationnement,
la Figure 12 représente une vue schématique en perspective d'un capteur encastré dans un trottoir,
la Figure 13 représente une vue schématique antérieure d'une borne avec un capteur gérant deux emplacements,
la Figure 14 représente une vue arrière,
la Figures 15 représente une vue arrière schématique éclatée de la structure de cette borne.
la Figure 16 représente une vue schématique d'un dispositif selon un second mode de mise en œuvre, avec un émetteur et un récepteur éloignés l'un de l'autre,
la Figure 17 représente une vue schématique en perspective d'un dispositif selon ce second mode de mise en œuvre commun à deux emplacements consécutifs,
la Figure 18 représente une vue schématique en perspective d'un dispositif selon ce second mode de mise en œuvre propre à un emplacement.

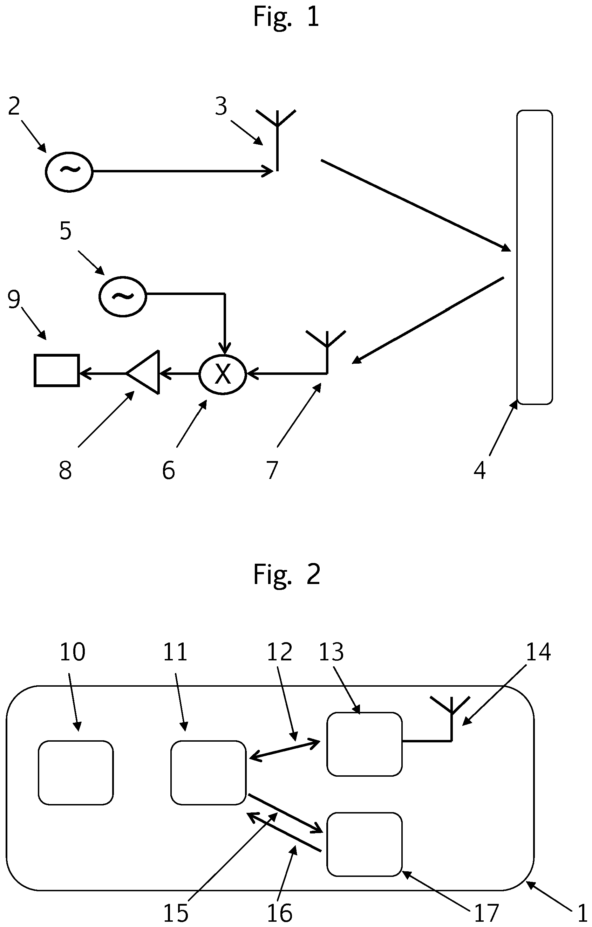

En se référant à la Figure 1 on voit un schéma d'un radar hyperfréquence d'un capteur 1 comprenant, par exemple, sur un circuit imprimé, un oscillateur 2 produisant un signal d'hyperfréquence f1 transmis à une antenne directrice 3 orientée vers la cible, à savoir un véhicule 4. La carte supporte également un second oscillateur 5 produisant un signal d'hyperfréquence f2 adressé à un mélangeur 6, dont l'autre entrée reçoit le signal provenant d'une antenne directive 7 sensible à l'écho de l'émission hyperfréquence f1. Le radar hyperfréquence ainsi réalisé, référencé en 17 sur la figure 2, peut être, par exemple un radar de type K-LC1aV4, commercialisé par la société suisse RFBeams.

Le signal de sortie du mélangeur 6 est adressé à un amplificateur logarithmique 8, par exemple du type AD8310 commercialisé par la société américaine AnalogDevice dont la sortie est adressée à un émetteur 9. Cet émetteur est agencé pour associer au signal émis, un signal d'identification du capteur. Les différents constituants du capteur sont alimentés par une alimentation 10, par exemple à pile au lithium. On voit, sur la Figure 2 que le capteur 1 comporte un microcontrôleur 11 relié par une communication 12 à un module radio 13 pourvu d'une antenne 14 permettant la communication radio avec un concentrateur(non représenté).Enfin, par les communications 15, 16, le microcontrôleur 11 est relié au radar hyperfréquence 17.

En l'absence d'obstacle, tel que le véhicule 4, l'antenne 7 ne détecte aucun signal sensible. En présence du véhicule, l'antenne 7 envoie au mélangeur 6 un signal de fréquence f1, engendré par la réception de l'écho, de sorte que le mélangeur envoie au transmetteur 9 ou émetteur 9 un signal de fréquence f1- f2. Le microcontrôleur, puce ou microprocesseur très simple, avec une horloge usuelle, gère l'ensemble des constituants du capteur 1.

A titre d'exemple la fréquence f1 est de 24.1 GHz, et la fréquence f2 est de 24.2GHz. La fréquence d'émission des signaux de l'émetteur est, par exemple de 868.3MHz.

De préférence, le logiciel incorporé dans le microcontrôleur est également sensible à la durée s'écoulant entre deux détections consécutives et empêche l'émission par l'émetteur 9, d'un signal de détection ou de non détection suivant trop rapidement un signal de non détection ou de détection. Ceci permet de ne pas tenir compte de perturbations provenant du passage sur l'emplacement de personnes ou d'objets, par exemple de caddies. La durée maximale de non émission est choisie pour être inférieure à la durée minimale nécessaire pour qu'un nouveau véhicule se gare sur l'emplacement, après le départ du véhicule initialement en place.

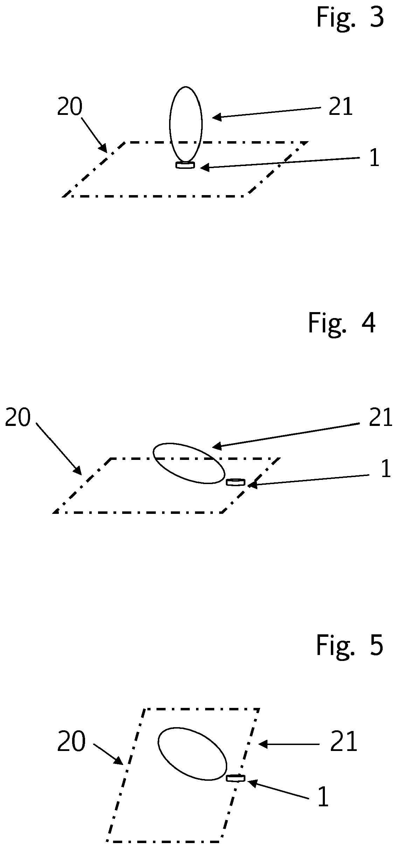

On se réfère à la figure3. Sur cette figure on a représenté schématiquement un emplacement de stationnement pour une voiture20, de forme rectangulaire présentant en son milieu un capteur 1, dans un boîtier, par exemple enterré dans le sol de l'emplacement, ou affleurant la surface du sol. L'antenne 3 du capteur émet un faisceau hyperfréquence, de fréquence f1 dont le diagramme de rayonnement ou lobe actif 21 est orienté verticalement depuis le centre de l'emplacement 1. Ce lobe présente les caractéristiques suivantes : il est directionnel; en transmission, la majeure partie de la puissance radio envoyée est concentrée autour d'un seul axe. En réception, le radar est quasiment uniquement sensible aux puissances reçues autour de cet axe. Dès qu'une voiture vient intercepter le lobe 21, elle renvoie un écho de fréquence f1 suffisamment puissant pour être capté par l'antenne 7 et provoquer l'envoi de l'information vers l'unité à distance, par exemple un concentrateur. Lorsque la voiture quitte l'emplacement, la disparition de l'écho provoque l'envoi de l'information correspondante.

En se référant à la Figure 4 on voit un capteur 1 placé au milieu d'un bord extrême 22 de l'emplacement. Les antennes sont inclinées pour que le lobe 21 s'étende uniquement à l'emplacement supposé du véhicule, la détection ne se faisant que sur l'emplacement 20. Sur la Figure 5 on a représenté un capteur 1 disposé sur l'un des bords latéraux de l'emplacement 20, avec un lobe 21 incliné de façon similaire.

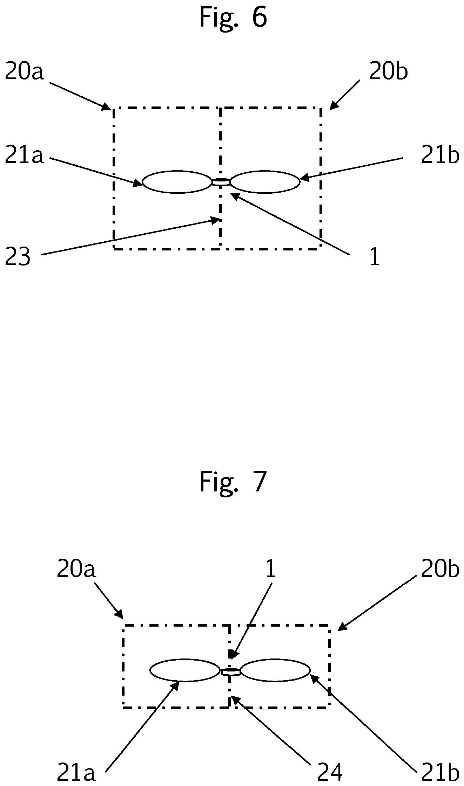

En se référant à la Figure 6 on voit deux emplacements de véhicules 20a, 20b disposés côte-à-côte. Le capteur 1 est disposé au milieu de leur bord commun 23 et comporte, cette fois, deux jeux d'antennes 3, 7 avec leurs oscillateurs et mélangeurs propres. Les antennes sont inclinées pour émettre, et recueillir les échos radar, selon des lobes respectifs de rayonnement 21a et 21b similaires au lobe 21 de la figure 4. La Figure 7 montre deux emplacements de véhicules 20a, 20b, disposés en suite. Le capteur 1 est disposé au milieu de leur extrémité commune 24, et détermine deux lobes 21a, 21b opposée, similaires au lobe 21 de la Figure 4.

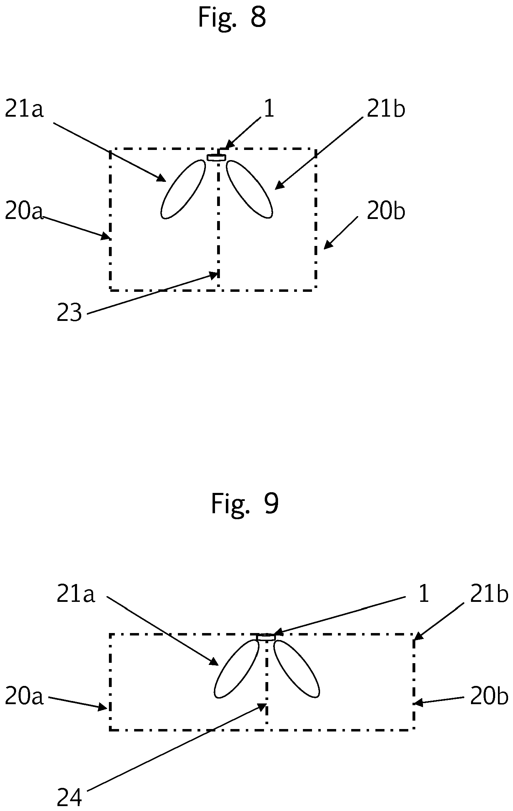

En se référant à la Figure 8 on voit que le capteur 1, avec deux jeux d'antennes et leurs oscillateurs et mélangeurs propres, est disposé à une extrémité du bord 23 commun aux deux emplacements 20a, 20b. Les antennes sont orientées respectivement pour émettre deux lobes respectifs 21a et 21b, orientés sensiblement en diagonale de leurs emplacements respectifs 20a, 20b. Sur la Figure 9, le capteur 1, similaire à celui de la Figure 8, est disposé à une extrémité de la base commune 24 des deux emplacements, les lobes étant orientés sensiblement selon les diagonales respectives des emplacements.

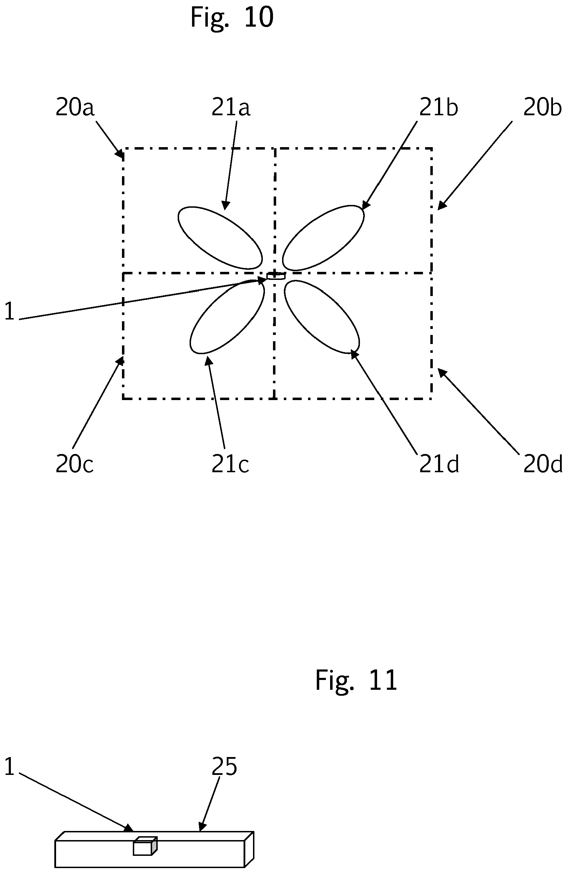

En se référant à la Figure10, on voit un groupe de quatre emplacements 20a, 20b, 20c, 20d, disposés en rectangle. Le capteur 1 est disposé au coin central commun au quatre emplacements. Il comporte, cette fois, quatre jeux d'antennes 3, 7 avec leurs oscillateurs et mélangeurs propres. Les antennes sont inclinées et orientées pour émettre, et recueillir les échos radar, selon quatre lobes respectifs de rayonnement 21a, 21b, 21c, 21d, similaires aux lobes de la figure 9.

On comprend, par ailleurs, que, dans le cas des emplacements selon les Figures 4 à10, les positions des capteurs 1 ne sont pas recouvertes par les véhicules en stationnement sur les emplacements, ce qui autorise leur maintenance ou leur remplacement sans devoir libérer préalablement, les emplacements concernés.

En se référant à la Figure 11 on a représenté une butée de stationnement usuelle 25, dans laquelle on a prévu un logement permettant d'y encastrer un capteur 1 contenu dans un boîtier parallélépipédique.

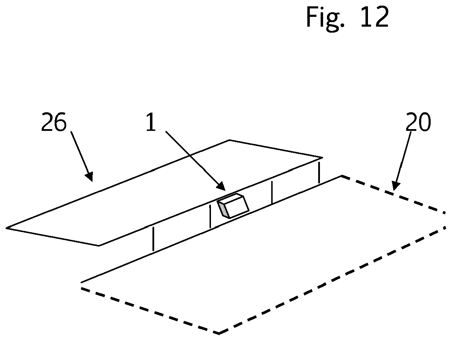

Sur la Figure 12 on voit un capteur 1, dans son boîtier, encastré dans un trottoir 26 bordant l'emplacement 20, selon une disposition analogue à celle de la Figure 5. Dans le cas d'une suite d'emplacements de stationnement de voirie, par exemple le long d'un trottoir, on disposera, de préférence, les capteurs selon la disposition de la Figure 9.

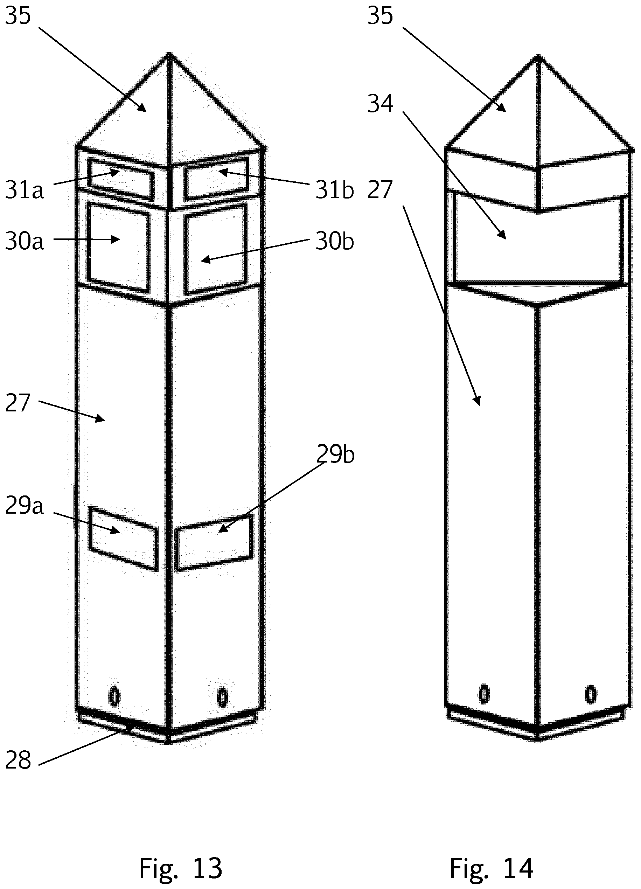

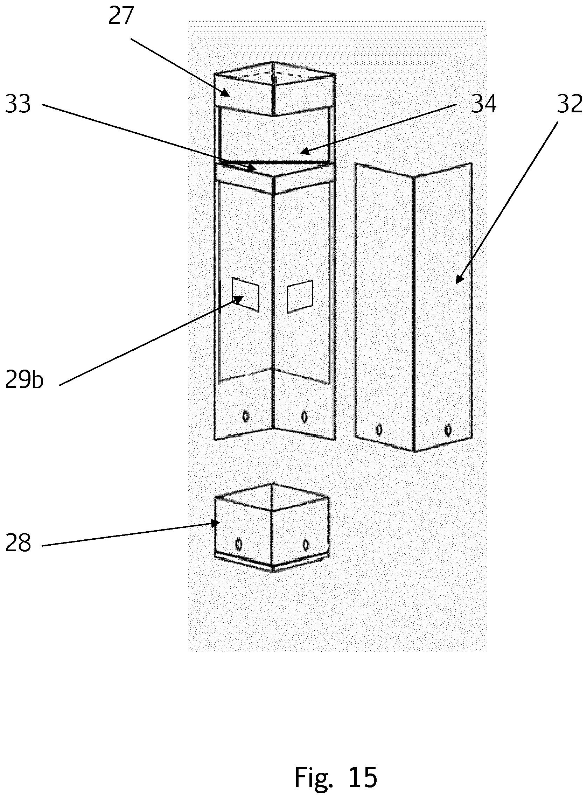

En se référant aux Figures 13 à 15, on a représenté une borne verticale 27, de forme parallélépipédique, de préférence métallique, montée sur un socle dont la base (non représentée) peut être vissée ou autrement fixée sur le sol, éventuellement avec passage d'un câble d'alimentation électrique, de préférence basse tension.

Sur le socle 27 on vient emboîter et fixer un coffre de borne 28 présentant deux faces 28a, 28b, respectivement orientées vers deux emplacements pour véhicule. A environ 50 cm du sol ces faces comportent des fenêtres 29a, 29b, obturées par des plaques en matériau synthétique, par exemple en polycarbonate. Vers leur extrémité supérieure les faces comportent deux fenêtres 30a, 30b pour présenter deux écrans de visualisation, ces fenêtres étant surmontées par deux indicateurs lumineux 31a, 31b, pouvant passer du rouge au vert et inversement. A l'arrière, la borne comporte un panneau diédrique de fermeture 32 qui vient obturer l'intérieur du coffre 27, entre le socle 28 et une paroi horizontale 33, laissant apparaître, au niveau des écrans 30a, 30b, un espace dont le fond 34 eut être occupé par un écran postérieur, par exemple à fin d'informations ou de publicité. On peut prévoir de remplir cet espace par un bloc de verre ou de polycarbonate, protégeant l'écran et assurant une continuité géométrique avec le panneau 32 et les bords de la paroi transversale33. La fixation du panneau 32 peut être assurée par tout moyen usuel. Enfin, le sommet de la borne peut être fermé par un chapeau pyramidal 35, en polycarbonate ou autre matériau permettant le fonctionnement d'une antenne de radiofréquence, GPRS ou WIFI. En variante on peut prévoir une communication par fil enterré.

Dans la partie inférieure de la borne, on installe une batterie, par exemple de 12 V, par exemple alimentée par le sol (non représentée). Derrière les fenêtres 29a 29 b, on installe un capteur selon l'invention, à deux radars orientés respectivement vers les deux emplacements de stationnement vers lesquels les fenêtres sont orientées. Le capteur commande les changements respectifs de couleur des indicateurs lumineux 31a, 31b, ainsi que l'envoi d'informations aux écrans des fenêtres 30a, 30b. Enfin le capteur peut communiquer avec une unité à distance, concentrateur, ou informatique de gestion, de préférence par le biais d'une antenne située à l'intérieur du chapeau 35.

Une borne de ce genre peut être installée, par exemple, sur un trottoir, par exemple dans une disposition analogue à la Figure 9 desservant deux emplacements de parking, mais à une certaine distance du bord longitudinal des deux emplacements (par exemple bordure de trottoir), par exemple à 50 cm ou 100 cm du bord.

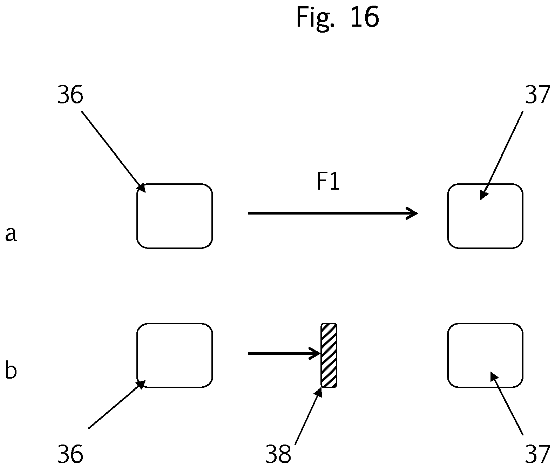

On se réfère à la Figure 16.
Sur celle-ci le schéma (a) montre un émetteur hyperfréquence 36, comprenant un oscillateur à hyperfréquence f1 et une antenne (non représentés) similaires à l'oscillateur 2 et à l'antenne 3, avec une alimentation séparée, par exemple une pile ordinaire (non représentée), destiné à être disposé dans ou sur un bord d'emplacement, et un récepteur 37, comprenant un oscillateur à hyperfréquence f2, analogue à l'oscillateur 2, une antenne analogue à l'antenne 7, orientée vers l'antenne de l'émetteur, un mélangeur et un amplificateur analogues au mélangeur 8 et à l'amplificateur 8. Ce récepteur est destiné à être disposé sur un bord de l'emplacement, voire à une certaine distance à l'extérieur de l'emplacement, de façon à ce qu'en l'absence d'un véhicule, le faisceau ou bulbe provenant de l'émetteur, suivant la flèche f1, soit capté par le récepteur. Lorsque, selon le schéma (b) un obstacle capable d'intercepter ou réduire fortement le faisceau hyperfréquence, tel qu'un véhicule schématiquement représenté 38, se trouve sur l'emplacement, le faisceau f1 est intercepté et le récepteur 37, détecte alors une onde hyperfréquence de puissance grandement réduite, signalant la présence de l'obstacle 38 sur l'emplacement.

Un tel émetteur 36 peut être formé par une carte de circuit électronique usuelle, portant également son antenne. L'orientation du faisceau ou lobe émis, par exemple perpendiculairement au plan de la carte, se fait simplement par inclinaison convenable de la carte. Le récepteur 37 peut être constitué de façon similaire. Les dimensions de l'émetteur, pile comprise, peuvent être de l'ordre de 30mm x 30mm x 15mm. On peut loger l'émetteur, avec une pile d'alimentation, par exemple, dans un contenant en forme de calotte sphérique aplatie en résine, par exemple d'un diamètre de l'ordre de 5 cm et d'une hauteur de l'ordre de 3 cm, l'orientation de l'émetteur dans le plan vertical étant définie lors du montage dans le contenant. Celui-ci peut être collé, vissé ou autrement fixé sur le sol de l'emplacement sans gêner le passage des roues ou des piétons. Une marque peut être prévue sur la calotte pour permettre à l'installateur d'orienter horizontalement l'émetteur vers le position du récepteur. On peut avantageusement mettre également un sachet usuel de poudre de dessiccation dans le logement, pour éviter une humidification de la pile, qui peut fonctionner de nombreuses années.

Un tel émetteur peut n'émettre qu'une impulsion très brève, par exemple de 10 microsecondes, et espacée dans le temps, par exemple toutes les secondes. Le cas échéant cette impulsion peut aussi comporter une identification du récepteur, par exemple un nombre compris entre 1 et 10, et/ou une indication du niveau de la pile d'alimentation.

Le récepteur peut comporter également une alimentation électrique propre, un microcontrôleur propre, et un émetteur radiofréquence ou autre moyen de communication avec une unité de gestion à distance.

Un tel dispositif détecte la présence ou l'absence d'un véhicule de façon bien nette. L'alimentation de l'émetteur peut être très réduite, par exemple sous forme d'une simple plie qui peut rester en place jusqu'à 15 ans. L'émetteur peut facilement être enterré dans le sol de l'emplacement ou disposé dans un meuble ou borne ou butée de stationnement. Le remplacement de l'émetteur est simple et ne nécessite pas de réglage autre que celle de l'orientation de son antenne vers le récepteur.

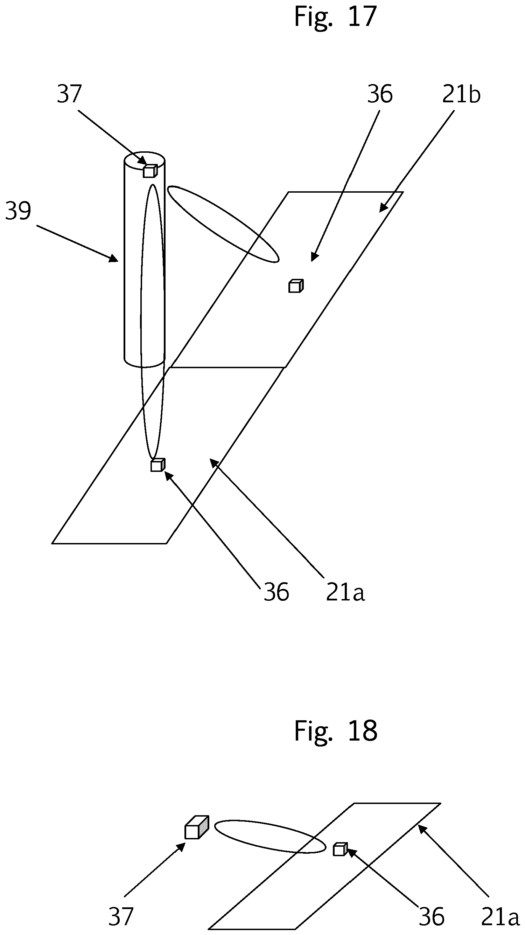

En se référant à la Figure 17, on voit qu'on peut avantageusement disposer un récepteur 36 au sol ou dans le sol, et ce bien à l'intérieur de l'emplacement, 21a ou 21b. Le récepteur 37 peut, par exemple être placé dans une borne 39 de grande hauteur, par exemple commune aux deux emplacements 21a, 21b. Il peut même être placé au-dessus de l'emplacement, par exemple au plafond d'un parc de stationnement. Il peut comporter un ou des indicateurs lumineux de stationnement, de préférence solidaires du boîtier dans lequel le récepteur est logé.

En se référant à la Figure 18, on voit un émetteur 36 fixé sur le sol, à l'intérieur de l'emplacement 21a, et un récepteur 37 situé à une hauteur importante, par exemple sous un plafond de parc de stationnement couvert ou souterrain (non représenté) par exemple une hauteur de 300 ou 400 cm, ce récepteur pouvant aussi se situer à une certaine distance d'un bord de l'emplacement, pouvant aller jusqu' à environ 500 cm. Ce récepteur 36 peut être associé, dans un même boîtier, à un bloc de signalisation LED rouge/vert et un module radio ISM.

Les différents composants électriques et électroniques des capteurs, radars, émetteurs et récepteurs hyperfréquence, y compris avec leurs antennes, microcontrôleurs, et mémoires sont tous largement disponibles dans le commerce. Ils peuvent être assemblés, par exemple sur des cartes à circuit imprimé, également disponibles dans le commerce. Il est à la portée immédiate de l'homme de l'art de réaliser ces circuits avec leurs plages de connexion pour ces composants, et pour une alimentation, par exemple à pile, et éventuellement pour une radio ou un connecteur filaire ou wifi.

## Revendications

1. Dispositif de gestion de stationnement de véhicules automobiles sur voirie, comprenant :
- des moyens de détection à ondes électromagnétiques hyperfréquence pour détecter la présence d'un véhicule automobile sur un emplacement spécifique de stationnement, et
- au moins une unité, recevant des informations de présence et d'absence de véhicule sur ledit emplacement, ces informations résultant de la détection opérée par les moyens de détection, l'unité étant configurée pour gérer lesdites informations et/ou les transmettre à une unité de gestion,
**caractérisé en ce que** les moyens de détection comportent au moins un capteur hyperfréquence (1) disposé au niveau d'au moins un emplacement spécifique susceptible de recevoir un véhicule et étant disposé au sol, ou dans le sol, ou encore à une hauteur n'excédant pas 1,50 m du sol, et notamment 1 m du sol,
le capteur (1) étant configuré pour émettre et recevoir un faisceau hyperfréquence en direction de la position d'un véhicule sur ledit emplacement spécifique, de sorte qu'une détection dans ledit faisceau provoque l'envoi d'une information de présence à ladite unité, ledit capteur (1) comprenant un, deux, trois ou quatre radars hyperfréquence (2, 3, 5, 7) chacun orienté spécifiquement vers un emplacement spécifique qui lui est attribué, et sensible à la présence et à l'absence d'un véhicule sur son emplacement spécifique, chaque radar étant sensible à la puissance de la simple réflexion par l'obstacle constitué par la présence du véhicule sur son emplacement, chaque radar comportant :
- une première antenne (3) orientée vers l'emplacement spécifique, en direction de la position d'un véhicule sur cet emplacement, de sorte que la majeure partie de la puissance radio envoyée soit concentrée autour d'un seul axe,
- un oscillateur (2) apte à générer une onde d'une première hyperfréquence f1 et à la transmettre à la première antenne (3),
- un autre oscillateur (5) apte à générer une onde d'une deuxième hyperfréquence f2 légèrement différente de la première fréquence f1,
- une antenne réceptrice (7) sensible à l'écho de l'émission radio de la première antenne, le radar étant ainsi quasiment uniquement sensible aux puissances reçues autour dudit axe,
- un mélangeur (6), dont l'une des entrées est alimentée par l'antenne réceptrice (7), et l'autre entrée du mélangeur (6) étant alimentée par ledit autre oscillateur (5) à la deuxième fréquence f2, la sortie du mélangeur étant connectée à un amplificateur logarithmique (8),
la présence du véhicule étant déterminée par le signal de sortie du mélangeur, qui présente alors une fréquence f1 - f2 égale à la différence des fréquences f1 et f2, la sortie de l'amplificateur (8) présentant alors une tension caractéristique,
ledit capteur (1) étant contenu ou enrobé dans un boîtier étanche, susceptible d'être enterré dans le sol, ou placé dans une bordure, ou une borne, ou emboîté dans un mobilier urbain, le dispositif comportant un moyen de transmission susceptible de communiquer à ladite unité l'information relative à la présence ou à l'absence d'un véhicule sur chaque emplacement.

2. Dispositif selon la revendication 1, **caractérisé en ce qu'**il comporte un moyen d'identification propre de l'emplacement ou de chacun des emplacements, associé au moyen de détection, de façon à associer à l'information de présence ou d'absence sur un emplacement, une information d'identification de cet emplacement.

3. Dispositif selon l'une des revendications 1 et 2, **caractérisé en ce que** ledit moyen de détection émet des ondes hyperfréquence comprises entre 1 et 1000 GHz, notamment de 10 jusqu'à 30 GHz.

4. Dispositif selon l'une des revendications 1 à 3, **caractérisé en ce que** l'émetteur du moyen de détection émet des impulsions d'ondes d'une durée comprise entre 1 et 1000 microsecondes avec une périodicité comprise entre 0,1 et 5 secondes.

5. Dispositif selon l'une des revendications précédentes, **caractérisé en ce qu'**un capteur commun (1) pour plusieurs emplacements, est disposé en un bord latéral commun (23) ou une extrémité commune (24) de deux emplacements, chaque antenne du capteur étant orientée vers l'emplacement qui lui est attribué.

6. Dispositif selon l'une des revendications 1 à 4, **caractérisé en ce qu'**un capteur commun (1) pour plusieurs emplacements est disposé sur un sommet commun à deux, trois ou quatre emplacements, chaque antenne du capteur étant orientée vers l'emplacement qui lui est attribué

7. Dispositif selon l'une des revendications 1 à 4, **caractérisé en ce que** le capteur est encastré dans un trottoir bordant l'emplacement

8. Dispositif selon l'une des revendications précédentes, **caractérisé en ce qu'**il est sensible à la durée s'écoulant entre deux détections consécutives et empêche l'émission, par l'émetteur (9), d'un signal de détection ou de non détection suivant trop rapidement un signal de non détection ou de détection

9. Dispositif selon l'une des revendications précédentes, **caractérisé en ce que** ladite unité est un concentrateur à distance communiquant avec une pluralité de capteurs (1) répartis sur une zone déterminée pour une communication sans fil, ledit concentrateur étant relié par des moyens de transmission, à des moyens de gestion informatiques.

10. Ensemble, comportant un emplacement de stationnement en voirie et un dispositif de gestion de stationnement de véhicules automobiles conforme à l'une quelconque des revendications précédentes, le capteur étant disposé au niveau dudit emplacement et étant disposé au sol, ou dans le sol, ou encore à une hauteur n'excédant pas 1,50 m du sol, et notamment 1 m du sol.

11. Procédé de gestion de stationnement de véhicules automobiles, voitures, motocyclettes ou camions, notamment en voirie, ou encore sur des aires ou parcs de stationnement mettant en œuvre le dispositif selon l'une quelconque des revendications précédentes **caractérisé par** les étapes suivantes :
surveillance par ladite détection hyperfréquence de chaque emplacement de stationnement, à chaque changement de détection, à savoir arrivée ou départ de véhicule, envoi des informations d'occupation de l'emplacement de stationnement, accompagné d'un signal d'identification de l'emplacement vers ladite unité, située à distance et traitement informatique de cette information.

## Patentansprüche

1. Vorrichtung zur Parksteuerung von Kraftfahrzeugen im Straßennetz, umfassend:
- Detektionsmittel mit elektromagnetischen Hyperfrequenzwellen, um die Anwesenheit eines Kraftfahrzeugs in einer spezifischen Parklücke zu detektieren, und
- wenigstens eine Einheit, die Informationen über die Anwesenheit oder Abwesenheit eines Fahrzeugs in der Lücke empfängt, wobei diese Informationen aus der durch die Detektionsmittel durchgeführten Detektion resultieren, wobei die Einheit eingerichtet ist, um die Informationen zu verwalten und/oder sie an eine Verwaltungseinheit zu übertragen,
**dadurch gekennzeichnet, dass** die Detektionsmittel wenigstens einen Hyperfrequenzsensor (1) aufweisen, der im Bereich wenigstens einer spezifischen Lücke, die in der Lage ist, ein Fahrzeug aufzunehmen, angeordnet ist und auf dem Erdboden, oder in dem Erdboden, oder auch in einer Höhe nicht über 1,50 m vom Erdboden, und insbesondere 1 m vom Erdboden, angeordnet ist,
wobei der Sensor (1) eingerichtet ist, um einen Hyperfrequenzstrahl in Richtung der Position eines Fahrzeugs in der spezifischen Lücke auszusenden und zu empfangen, so dass eine Detektion in dem Strahl das Senden einer Anwesenheitsinformation an die Einheit bewirkt, wobei der Sensor (1) einen, zwei, drei oder vier Hyperfrequenzradare (2, 3, 5, 7) umfasst, die jeweils spezifisch zu einer spezifischen, ihm zugewiesenen Lücke hin ausgerichtet sind und gegenüber der Anwesenheit und der Abwesenheit eines Fahrzeugs in seiner spezifischen Lücke empfindlich sind, wobei jeder Radar gegenüber der Leistung der Einfachreflexion durch das Hindernis, das von der Anwesenheit des Fahrzeugs in seiner spezifischen Lücke gebildet ist, empfindlich ist, wobei jeder Radar Folgendes aufweist:
- eine erste Antenne (3), die zu der spezifischen Lücke hin, in Richtung der Position eines Fahrzeugs in dieser Lücke, ausgerichtet ist, so dass der Großteil der gesendeten Funkleistung um eine einzige Achse herum konzentriert ist,
- einen Oszillator (2), der in der Lage ist, eine Welle mit einer ersten Hyperfrequenz f1 zu erzeugen und sie an die erste Antenne (3) zu übertragen,
- einen weiteren Oszillator (5), der in der Lage ist, eine Welle mit einer zweiten Hyperfrequenz f2 zu erzeugen, die von der ersten Hyperfrequenz f1 geringfügig verschieden ist,
- eine Empfangsantenne (7), die gegenüber dem Echo der Funkemission der ersten Antenne empfindlich ist, wobei der Radar auf diese Weise lediglich gegenüber den um die Achse herum empfangenen Leistungen empfindlich ist,
- eine Mischeinrichtung (6), von der einer der Eingänge durch die Empfangsantenne (7) gespeist wird, und wobei der andere Eingang der Mischeinrichtung (6) durch den weiteren Oszillator (5) mit der zweiten Frequenz f2 gespeist wird, wobei der Ausgang der Mischeinrichtung mit einem logarithmischen Verstärker (8) verbunden ist,
wobei die Anwesenheit des Fahrzeugs durch das Ausgangssignal der Mischeinrichtung ermittelt wird, die dann eine Frequenz f1 - f2 gleich der Differenz der Frequenzen f1 und f2 aufweist, wobei der Ausgang des Verstärkers (8) dann eine charakteristische Spannung aufweist,
wobei der Sensor (1) in einem abgedichteten Gehäuse enthalten oder umhüllt ist, das in der Lage ist, in den Erdboden eingelassen, oder in einem Bordstein, oder einem Poller, platziert oder in einem Stadtmöbel eingebaut zu werden, wobei die Vorrichtung ein Übertragungsmittel aufweist, das in der Lage ist, an die Einheit die Information bezüglich der Anwesenheit oder der Abwesenheit eines Fahrzeugs in jeder Lücke zu kommunizieren.

2. Vorrichtung nach Anspruch 1, **dadurch gekennzeichnet, dass** sie ein der Lücke oder jeder der Lücken eigenes Identifikationsmittel aufweist, das dem Detektionsmittel zugeordnet ist, um der Information über die Anwesenheit oder Abwesenheit in einer Lücke eine Identifikationsinformation dieser Lücke zuzuordnen.

3. Vorrichtung nach einem der Ansprüche 1 und 2, **dadurch gekennzeichnet, dass** das Detektionsmittel Hyperfrequenzwellen zwischen 1 und 1000 Ghz, insbesondere von 10 bis 30 Ghz, aussendet.

4. Vorrichtung nach einem der Ansprüche 1 bis 3, **dadurch gekennzeichnet, dass** der Sender des Detektionsmittels Wellenimpulse mit einer Dauer zwischen 1 und 1000 Mikrosekunden mit einer Periodizität zwischen 0,1 und 5 Sekunden aussendet.

5. Vorrichtung nach einem der vorhergehenden Ansprüche, **dadurch gekennzeichnet, dass** ein für mehrere Lücken gemeinsamer Sensor (1) in einem gemeinsamen seitlichen Rand (23) oder einem gemeinsamen Ende (24) von zwei Lücken angeordnet ist, wobei jede Antenne des Sensors zu der ihr zugewiesenen Lücke hin ausgerichtet ist.

6. Vorrichtung nach einem der Ansprüche 1 bis 4, **dadurch gekennzeichnet, dass** ein für mehrere Lücken gemeinsamer Sensor (1) auf einer Kuppe angeordnet ist, die zwei, drei oder vier Lücken gemeinsam ist, wobei jede Antenne des Sensors zu der ihr zugewiesenen Lücke hin ausgerichtet ist.

7. Vorrichtung nach einem der Ansprüche 1 bis 4, **dadurch gekennzeichnet, dass** der Sensor in einem Gehweg eingebettet ist, der die Lücke säumt.

8. Vorrichtung nach einem der vorhergehenden Ansprüche, **dadurch gekennzeichnet, dass** sie gegenüber dem Zeitraum zwischen zwei aufeinander folgenden Detektionen empfindlich ist und das Aussenden, eines Detektions- oder Nichtdetektionssignals durch den Sender (9), das zu rasch einem Nichtdetektions- oder Detektionssignals folgt, verhindert.

9. Vorrichtung nach einem der vorhergehenden Ansprüche, **dadurch gekennzeichnet, dass** die Einheit ein ausgelagerter Hub ist, der mit einer Mehrzahl von Sensoren (1), die über eine bestimmte Zone für eine drahtlose Kommunikation verteilt sind, kommuniziert, wobei der Hub durch Übertragungsmittel mit Computerverwaltungsmitteln verbunden ist.

10. Anordnung, aufweisend eine Parklücke im Straßennetz und eine Vorrichtung zur Parksteuerung von Kraftfahrzeugen nach einem der vorhergehenden Ansprüche, wobei der Sensor im Bereich der Lücke angeordnet ist und auf dem Erdboden, oder in dem Erdboden, oder auch in einer Höhe nicht über 1,50 m vom Erdboden, und insbesondere 1 m vom Erdboden, angeordnet ist.

11. Verfahren zur Parksteuerung von Kraftfahrzeugen, Personenkraftwagen, Motorrädern oder Lastkraftwagen, insbesondere im Straßennetz, oder auch auf Parkflächen oder -plätzen unter Verwendung der Vorrichtung nach einem der vorhergehenden Ansprüche, **gekennzeichnet durch** die folgenden Schritte: Überwachen, durch die Hyperfrequenz-Detektion, jeder Parklücke, bei jeder Detektionsänderung, das heißt Ankunft oder Abfahrt von Fahrzeugen, Senden der Informationen über die Belegung der Parklücke, begleitet von einem Identifikationssignal der Lücke zu der ausgelagert befindlichen Einheit hin und Computerverarbeitung dieser Information.

## Claims

1. Device for managing automobile vehicle parking on a road, comprising:
- means for detecting with ultrahigh frequency electromagnetic waves in order to detect the presence of an automobile vehicle on a specific parking place, and
- at least one unit, receiving information about the presence and absence of a vehicle on said place, this information resulting from the detection performed by the detection means, the unit being configured to manage said information and/or to transmit it to a management device,
**characterised in that** the detection means comprise at least one ultrahigh frequency senor (1) disposed at the level of at least one specific place able to receive a vehicle and being disposed on the ground, or in the ground, or even at a height not exceeding 1.50 m from the ground, and in particular 1 m from the ground,
the sensor (1) being configured to emit and to receive an ultrahigh frequency beam in the direction of the position of a vehicle on said specific place, so that detection in said beam causes dispatch of information about the presence to said unit,
said sensor (1) comprising one, two, three or four ultrahigh frequency radar systems (2, 3, 5, 7), each orientated specifically towards a specific place which is allocated to it, and sensitive to the presence and to the absence of a vehicle on its specific place, each radar system being sensitive to the power of the single reflection by the obstacle formed by the presence of the vehicle on its place, each radar system comprising:
- a first antenna (3) orientated towards the specific place, in a direction of the position of a vehicle on this place, so that the major part of the sent radio power is concentrated about a single axis,
- an oscillator (2) able to generate a wave of a first ultrahigh frequency and to transmit it to the first antenna (3),
- another oscillator (5) able to generate a wave of a second ultrahigh frequency f2 which is slightly different from the first frequency f1,
- a receiving antenna (7) sensitive to the echo of the radio emission of the first antenna, the radar system being hence almost solely sensitive to the powers received about said axis,
- a mixer (6), one of the inputs of which is supplied by the receiving antenna (7), and the other input of the mixer (6) being supplied by said other oscillator (5) at the second frequency f2, the output of the mixer being connected to a logarithmic amplifier (8),
the presence of the vehicle being determined by the output signal of the mixer, which has then a frequency f1 - f2 equal to the difference of the frequencies f1 and f2, the output of the amplifier (8) then having a characteristic voltage,
said sensor (1) being contained or embedded in a sealed casing, able to be interred in the ground, or placed in a border, or a terminal, or housed in an item of street furniture,
the device comprising a transmission means which is able to communicate to said unit information relating to the presence or to the absence of a vehicle on each place.

2. Device according to claim 1, **characterised in that** it comprises an identification means which is characteristic of the place or each of the places, connected to the detection means, so as to associate, with the information about the presence or absence on a place, identification information about this place.

3. Device according to one of the claims 1 and 2, **characterised in that** said detection means emits ultrahigh frequency waves between 1 and 1,000 GHz, in particular from 10 to 30 GHz.

4. Device according to one of the claims 1 to 3, **characterised in that** the emitter of the detection means emits wave pulses of a duration between 1 and 1,000 microseconds with a periodicity between 0.1 and 5 seconds.

5. Device according to one of the preceding claims, **characterised in that** a common sensor (1) for a plurality of places is disposed in a common lateral edge (23) or a common end (24) of two places, each antenna of the sensor being orientated towards the place which is allocated to it.

6. Device according to one of the claims 1 to 4, **characterised in that** a common sensor (1) for a plurality of places is disposed on a vertex common to two, three or four places, each antenna of the sensor being orientated towards the place which is allocated to it.

7. Device according to one of the claims 1 to 4, **characterised in that** the sensor is embedded in a pavement bordering the place.

8. Device according to one of the preceding claims, **characterised in that** it is sensitive to the length of time elapsing between two consecutive detections and prevents emission, by the emitter (9), of a signal of detection or of non-detection following too rapidly upon a signal of non-detection or of detection.

9. Device according to one of the preceding claims, **characterised in that** said unit is a difference concentrator communicating with a plurality of sensors (1) distributed over a determined zone for a wireless communication, said concentrator being connected by transmission means, to information management means.

10. Assembly, comprising a parking place on a road and a device for managing automobile vehicle parking according to any of the preceding claims, the sensor being disposed at the level of said place and being disposed on the ground, or in the ground, or even at a height not exceeding 1.50 m from the ground, and in particular 1 m from the ground.

11. Method for managing parking of automobile vehicles, cars, motorcycles or lorries, in particular on a road, or even on areas for parking or car parks, employing the device according to any of the preceding claims, **characterised by** the following steps:
surveillance by said ultrahigh frequency detection of each parking place, at each change of detection, i.e. vehicle arrival or departure, dispatch of information about occupation of the parking place, accompanied by an identification signal of the place to said unit, situated at a distance, and data processing of this information.
